(19) Europäisches Patentamt

European Patent Office

Office européen des brevets

(11) **EP 2 849 478 A1**

(12) **EUROPEAN PATENT APPLICATION**

(43) Date of publication:
**18.03.2015  Bulletin 2015/12**

(51) Int Cl.:
**H04W 24/02** *(2009.01)*   **H04W 52/02** *(2009.01)*
**H04W 84/04** *(2009.01)*

(21) Application number: **13290219.8**

(22) Date of filing: **13.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Ashraf, Imran**
  **Westlea, Swindon SN5 7DJ (GB)**
• **Shrivastava, Parichaya**
  **Westlea, Swindon SN5 7DJ (GB)**

• **Carter, Alan**
  **Westlea, Swindon SN5 7DJ (GB)**

(74) Representative: **Sarup, David Alexander**
  **Alcatel-Lucent Telecom Ltd**
  **Intellectual Property Business Group**
  **Christchurch Way**
  **Greenwich**
  **London SE10 0AG (GB)**

Remarks:
Amended claims in accordance with Rule 137(2) EPC.

(54) **A base station and a method of a base station estimating traffic load on a neighbouring base station**

(57)    A small cell base station (4) is provided configured to: obtain information about the control channels of a neighbouring macrocell base station (8) in which the information comprises transmit power on the pilot channel of the neighbouring base station and transmit powers of the other control channels of the neighbouring macrcell base station (8); and estimate traffic load on the neighbouring macrocell base station (8) using said information.

Small Cell fully operational with pilot transmissions switched on. UE measurements are used to estimate load of macrocell B.

*FIG. 3*

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells.

Heterogeneous Networks are cellular wireless telecommunications systems made up of both macrocell base stations and small cell base stations. Some features of small cell base stations, such as radio coverage optimisation and activation/deactivation of a power-saving sleep mode, rely on exchange of load information with the underlying macrocell. For example, by using a backhaul connection, for example over the Internet, a small cell base station of Universal Mobile Telecommunications System (UMTS) type may request load information from the underlying macrocell using the Cell Load Information IE defined in Third Generation Partnership Project (3GPP) Technical Specification 25.413. IE denotes Information Element.

Small cell base stations are often referred to as small cells.

### Summary

The reader is referred to the appended independent claims. Some preferred features are laid out in the dependent claims.

An example of the present invention is a base station configured to:

obtain information about the control channels of a neighbouring base station in which the information comprises transmit power on the pilot channel of the neighbouring base station and transmit powers of the other control channels of the neighbouring base station; and estimate traffic load on the neighbouring base station using said information.

Preferably the base station is also configured to transit between an active mode and a sleeping mode dependent upon whether or not said estimated traffic load exceeds a predetermined level.

Preferably the base station is a small cell base station and the neighbouring base station is a macrocell base station.

In some preferred embodiments a small cell base station estimates the loading of an underlying macrocell in an autonomous manner not requiring transfer of data over a backhaul connection from a macrocell base station.

Preferred embodiments may be considered as a type of Radio Resource Management (RRM), in a small cell base station, that uses radio measurements.

Preferred embodiments are autonomous as they do not rely on a physical interface, in other words backhaul connectivity, to retrieve a neighbour base station's load information.

In some preferred embodiments, a base station estimates autonomously the loading on a neighbouring base station in a heterogeneous network (HetNet), for example in which small cell base stations from multiple different manufacturers are provided.

The present invention alos relates to corresponding methods of a base station estimating traffic load on a neighbouring base station by:

obtaining information about the control channels of the neighbouring base station in which the information comprises transmit power on the pilot channel of the neighbouring base station and transmit powers of the other control channels of the neighbouring base station; and estimating traffic load on the neighbouring base station using said information.

### Brief Description of the Drawings

An embodiment of the present invention will now be described by way of example and with reference to the drawings, in which:

Figure 1 is a diagram illustrating a small cell base station in sleep mode embedded within the macrocell's coverage area,

Figure 2 is a diagram illustrating a small cell base station in a fully active mode using a dedicated carrier frequency band ('dedicated carrier') and using measurements to estimate macrocell load,

Figure 3 is a diagram illustrating a small cell base station in a fully active mode using a shared carrier frequency band ('shared carrier') shared with the macrocell base station and using user terminal measurements to estimate macrocell load, and

Figure 4 is a flow-chart illustrating the process of estimation of macrocell load used in the small cell base station shown in Figure 3.

**Detailed Description**

When considering a known system, the inventors realised that although it is desirable for an underlying macrocell to be connected to the small cells within its coverage, this is not always possible. In other words, it is not always possible for a macrocell base station providing a coverage area within which small cell base stations are situated to be connected to those small cell base stations. This is due to the large number of small cells that may be present within the macrocell and processing constraints at the macrocell.

The inventors realised that it was inefficient and not feasible from a practical perspective for a macrocell base station to support individual connections with a large number of small cell base stations within its coverage area. Problems such as high processing load at the macrocell base station, high control signalling traffic in the network, small cell bandwidth issues.

The inventors also realised that physical interfaces between macrocell base stations and small cell base stations are not completely reliable in the known system.

Example embodiments will now be described after some Nomenclature is briefly defined.

Nomenclature

$PL^i$ - Path loss from the receiver to base station $i$.

$RSCP^i$ - CPICH received signal code power (RSCP) received from base station i.

$(E_c/N_o)^i$ - CPICH Ec/No received from base station $i$.

$RSSI$ - The total received wide band power, including the noise generated in the receiver. RSSI is identical to CPICH RSCP divided by CPICH Ec/No (in linear units). $P^i_{tx,CPICH}$ - CPICH transmit power of base station i. $P^i_{tx,CTRL}$ - Total transmit power on all control channels of base station $i$, including that of the CPICH. $P^i_{tx,TRAFFIC}$ - Traffic channels transmit power of base station $i$. $P^i_{tx,MAX}$ - Maximum transmit power of base station $i$.

$L^i$ - Load of base station $i$, it equates to $\left( \dfrac{P^i_{tx,TRAFFIC} + P^i_{tx,CTRL}}{P^i_{tx,MAX}} \right) \times 100\%,$ with all values in linear units.

Example with dedicated carrier and a sniffer

A heterogeneous Network (HetNet) involves a network of underlying macrocells provided by macrocell base stations over which many small cell base stations are overlaid.

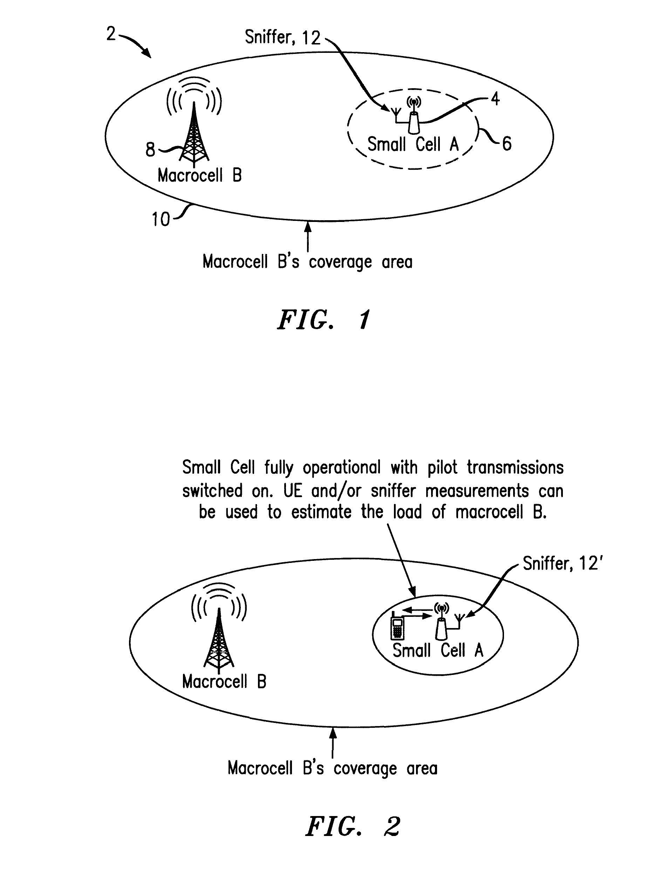

As shown in Figure 1, a HetNet 2 includes a small cell base station 4 (Small Cell A), within the coverage area 10 of a macrocell base station 8 (Macrocell B). The small cell 4 provides a small cell coverage area 6. Small cell base stations are often referred to as small cells. An example type of small cell base station is a femtocell base station.

In this example, the small cell base station 4 is in sleep mode in that its normal pilot transmissions do not occur. This is as a result of there being low user traffic in the vicinity of the small cell base station.

The small cell base station 4 includes a so-called "sniffer" 12 which is a receiver operative to perform downlink measurements on the control channel transmissions from the macrocell base station 8. In this example, the small cell base station in sleep mode has a dedicated carrier frequency band to be used by the small cell base station but makes measurements in the downlink carrier frequency band of the macrocell base station. In an alternative example, the small cell base station in sleep mode makes measurements in a shared frequency band to be used by the small cell base station but shared with the macrocell base station.

The quantities measured using the sniffer 12 are CPICH RSCP and CPICH Ec/No, where CPICH is Common Pilot Channel, RSCP is Received Signal Code Power, and Ec/No is signal to interference ratio. $P^i_{tx,CPICH}$ - CPICH transmit power of base station i.

The sniffer 12 determines the CPICH transmit power of the macrocell base station 8 from the known System Information Broadcast SIB5 broadcasted by the macrocell base station 8 on the Primary-Common Control Physical Channel (P-CCPCH). This CPICH transmit power is denoted $P^B_{tx,CPICH,}$. $P^i_{tx,CTRL}$ - Total transmit power on all control channels of base station i, including that of the CPICH.

In order to calculate the total transmit power, denoted $P^B_{tx,CTRL}$, on all control channels of the macrocell base station, transmit powers of the other control channels are determined in two different ways depending on the specific control channel:

1) from system broadcast information, such as SIB5 of 3GPP TS25.331 for channels such as AICH and PICH, or
2) by measuring the received power over a period of time and then applying the CPICH path loss to calculate the transmit power, for examplefor S-CCPCH.

The result is then added to the $P^B_{tx,CPICH,}$ to give the $P^i_{tx,CTRL}$

Alternatively, instead of calculating $P^B_{tx,CTRL}$ from measurements as explained above, the small cell base station 4 may query the Operations and Management database (not shown, OAM) for information regarding the $P^B_{tx,CTRL}$.

Alternatively, the $P^B_{tx,CTRL}$ may be configured in the small cell at the time of deployment. $P^i_{tx,MAX}$ - Maximum transmit power of base station i.

It is assumed that the maximum transmit power $P^B_{tx,MAX}$ of the underlying macrocell base station 8 (Macrocell B) is configured in the small cell base station 4 (Small Cell A) at the time of deployment. As an alternative, the small cell may query the OAM database to find out the $P_{tx,MAX}$ of the macrocell B.

Small Cell base station estimates macrocell load

The small cell base station 4 includes a processor (not shown) which then makes the following calculations to estimate the traffic channels transmit power of the macrocell base station ($P^B_{tx,TRAFFIC|}$), and subsequently the macrocell load $L^B$:

$$PL^B = P^B_{tx,CPICH} - RSCP^B[dB]$$

$$RSSI = RSCP^B - (E_c / N_o)^B[dBm]$$

$$P^B_{tx,TRAFFIC} = 10\log_{10}\left[10^{(RSSI/10)} - 10^{\left(P^B_{tx,CTRL}-PL^B\right)/10}\right] + PL^B[dB]$$

$$\Rightarrow L^B = \left(\frac{10^{P^B_{tx,TRAFFIC}/10} + 10^{P^B_{tx,CTRL}/10}}{10^{P^B_{tx,MAX}/10}}\right) \times 100\%$$

B denotes the macrocell base station 8. Base station i in the Nomenclature section is here taken as the macrocell base station, so denoted B.

It can be considered that:

The pathloss from receiver to macrocell base station is the CPICH transmit power of the macrocell base station minus the CPICH received signal code power (RSCP) received from the macrocell base station (in dB).

The total received wide band power (RSSI), including noise generated in the receiver is the CPICH received signal code power (RSCP) received from the macrocell base station minus the CPICH Ec/No received from the macrocell base station (in dBm).

The traffic channels transmit power of the macrocell base station is calculated as a function of: the total received wide band power (RSSI); the total transmit power on all control channels, including CPICH, of the macrocell base station; and the path loss from the receiver to the macrocell base station.

The load $L^B$ on the macrocell base station is then calculated as a function of the traffic channels transmit power, the total transmit power on all control channels and the maximum transmit power.

This method of estimating macrocell load may be considered a Radio resource Management (RRM) algorithm running in a small cell base station that uses radio measurements.

Changing small cell mode dependent upon the estimated macrocell load

The load $L^B$ on the macrocell base station is then compared to a predetermined threshold.

If the load $L^B$ is greater than the threshold, and the small cell base station is in a sleep mode, the small cell base station is shifted out of sleep mode and into active mode.

As shown in Figure 2, if the small cell is in active mode, in other words is fully operational, and uses a dedicated carrier frequency band, the small cell base station 4 uses its sniffer 12 to perform the downlink measurements on the macrocell's carrier frequency band.

Other examples using dedicated carriers

In some otherwise similar embodiments, measurements can be made, in whole or in part, by user terminals in the small cell, in addition to or instead of by the sniffer.

In some otherwise similar embodiments, measurements can be made by user terminals in the small cell instead of by a sniffer.

Example with shared carrier without a sniffer

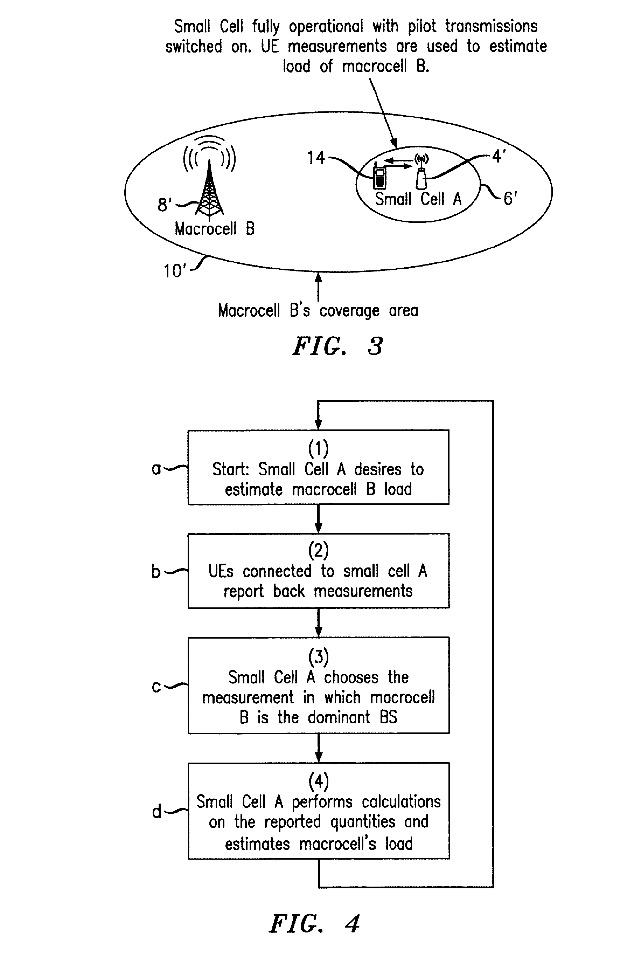

As shown in Figure 3, in an alternative example, a small cell base station 4' is in active mode connected to user terminals, and measurements are made in a shared frequency band used by the small cell base station but shared with the macrocell base station 8'. As the small cell base station is active in the carrier frequency band, the sniffer cannot be used to perform measurements of the macrocell base station's downlink using the same frequency band. Instead the small cell base station relies on measurements taken by user terminals in order to estimate macrocell base station load.

It will be understood that:

(a) Through the OAM database (not shown), the small cell base station 4' (Small Cell A) knows the absolute CPICH transmit power and total control channels transmit power of the macrocell base station - $P^B_{tx,CPICH}$ and $P^B_{tx,CTRL}$ respectively.

(b) The control channel transmit powers are statically set at the macrocell base station (or in an alternative embodiment where the control channel transmit powers are adaptive, the OAM database is updated with their latest values). It is assumed that the control channel transmit power varies slowly, if at all.

(c) The small cell base station 4' (Small Cell A) knows the Primary Scrambling Codes (PSCs) of all the surrounding cells and the OAM database provides a mapping of the PSC to the transmit power of CPICH and other control channels. The PSCs are known by the small cell base station as the PSCs are needed to create neighbor lists.

(d) The small cell base station knows $P^A_{tx,CPICH}$ and $P^A_{tx,CTRL}$ from its own internal database. The small cell base station estimates $P^A_{tx,TRAFFIC}$ by averaging its layer 1 code power reports across all calls as required by the latest current version of Third Generation Partnership Project (3GPP) Technical Specification 25.133 as of the effective filing date of this patent application.

It will be understood that in the Figure 4 example, the small cell base station is fully operational with pilot transmissions switched on. Measurements by user terminals are used to estimate the load on the macrocell base station.

As shown in Figure 4:

The small cell base station 4' desires (step a) to estimate the load on the macrocell base station. The user terminals connected to the small cell base station report back (step b) to the small cell base station measurements taken including in respect of the serving small cell base station, namely $RSCP^A$ and $(Ec/No)^A$, and in respect of the macrocell base station, namely $RSCP^B$ and $(Ec/No)^B$.

The measurements reported by the user terminals may include measurements of other macrocells in addition to that of the macrocell base station with the strongest signal (the dominant macrocell base station). The small cell base station selects (step c) those measurements for which the macrocell base station is dominant. This is done by ascertaining that the $RSCP^B$ from the macrocell base station 8' (Macrocell B) is greater than that of a next best macrocell base station by a predetermined margin, in this example10 dB. In other words, in the case of multiple user terminals reporting measurements of multiple neighboring macrocell base stations, the small cell chooses the user terminal measurements of the dominant macrocell in order to estimate its load.

The small cell base station then performs (step d) calculations to estimate the macrocell base station load as follows:

$$PL^A = P^A_{tx,CPICH} - RSCP^A[dB]$$

$$PL^B = P^B_{tx,CPICH} - RSCP^B[dB]$$

$$RSSI = RSCP^A - (E_c/N_o)^A[dBm]$$

$$RSSI' = 10\log\left(10^{(RSSI/10)} - 10^{\left(P^A_{tx,CTRL}-PL^A\right)/10} - 10^{\left(P^A_{tx,TRAFFIC}-PL^A\right)/10}\right)[dBm]$$

$$P^B_{tx,TRAFFIC} = 10\log_{10}\left[10^{RSSI'/10} - 10^{\left(P^B_{tx,CTRL}-PL^B\right)/10}\right] + PL^B[dB]$$

$$\Rightarrow L^B = \left(\frac{10^{P^B_{tx,TRAFFIC}/10} + 10^{P^B_{tx,CTRL}/10}}{10^{P^B_{tx,MAX}/10}}\right)\times100\%$$

In the above calculations, RSSI' represents the received power at the user terminal caused by the transmissions from macrocell base station 8' (Macrocell B). RSSI' is calculated by subtracting control and traffic channel powers of the small cell base station (Small Cell A) from total RSSI. In the next step, received power from the control channels of the macrocell base station (Macrocell B) is subtracted from RSSI' to estimate the traffic channels transmit power $P^B_{tx,TRAFFIC}$ at Macrocell B.

It may be noted that small cell base station (Small Cell A) may estimate the loading of a particular macrocell base station over a number of samples to obtain its average cell loading. The reported measurements may be from a single user terminal over a period of time, or multiple user terminals distributed within the coverage area of small cell. Only measurements from user terminals that report the particular macrocell base station as the dominant base station are considered in the calculations. Macrocell base stations are identified using their Primary Scrambling Codes (PSCs). Furthermore, various forgetting factors may be used in the averaging calculation to anticipate changes in cell loading.

It will also be noted that, in some embodiments, the traffic channel power of a macrocell base station calculated based on a user terminal's report in one instance can also be used in another load calculation in which RSSI' contains traffic channel received powers from multiple macrocell base stations.

Another variant

In the case of a single user terminal that reports measurements of multiple equally-strong neighbours, it is not possible to estimate the load of each of the neighbours from those measurements. This is because the single value of RSSI' would then contain the unknown traffic channel components of more than one macrocell base stations. In this case, the small cell uses heuristics to estimate the sum load of all macrocell neighbours rather than separately for each base station. This sum load estimation may provide useful information as to the current load on the system. In particular, if the sum load is close to the sum capacity of all neighboring base stations, the small cell deduces that all neighboring macrocell base stations are fully loaded.

General

The present invention may be embodied in other specific forms without departing from its essential characteristics.

For example, load estimation of a neighbouring base station can be done by a first base station where the first base is a macrocell, small cell, femtocell, picocell, metrocell base station or other type of base station and the neighbouring base station is a macrocell, small cell, femtocell, picocell, metrocell base station or other type of base station.

For example, the estimation of the neighbouring base stations load can help in a number of ways. For example, from knowing the loading on the adjacent cell, handover parameters and/or idle mode parameters are adjusted to either cause shedding user connections to more lightly loaded base stations, or alternatively keeping them on the serving base station. In another example, as described previously a small cell base station in sleep mode uses it sniffer receiver (or measurements from user terminals) to estimate the loading on a macrocell base station providing an underlying macrocell and then wake up when the loading on the macrocell base station exceeds a given threshold.

The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

**Claims**

1.   A base station configured to:

   obtain information about the control channels of a neighbouring base station in which the information comprises transmit power on the pilot channel of the neighbouring base station and transmit powers of the other control channels of the neighbouring base station; and
   estimate traffic load on the neighbouring base station using said information.

2.   A base station according to claim 1, further configured to transit between an active mode and a sleeping mode dependent upon whether or not said estimated traffic load exceeds a predetermined level.

3.   A base station according to claim 1 or claim 2, which is a small cell base station, the neighbouring base station being a macrocell base station.

4.   A base station according to any preceding claim, in which the information comprises received power measured on the pilot channel and signal to interference ratio on the pilot channel.

5.   A base station according to claim 4, in which the received power is Received Signal Code Power, RSCP, of the Common Pilot Channel, CPICH, and the signal to interference ratio is the signal to interference ratio, Ec/No, of the Common Pilot Channel, CPICH.

6.   A base station according to any preceding claim, in which the information further comprises total transmit power of the control channels of the neighbouring base station comprising the transmit power on the pilot channel of the neighbouring base station and the transmit powers of the other control channels of the neighbouring base station.

7.   A base station according to claim 6, in which the information further comprises maximum transmit power of the neighbouring base station.

8. A base station according to any preceding claim, in which the traffic load on the neighbouring base station is estimated using an estimate of traffic channels transmit power of the neighbouring base station, said estimate of traffic channels transmit power being determined from:

received Signal Code Power, RSCP, of the Common Pilot Channel, CPICH of the neighboring base station;
signal to interference ratio, Ec/No, of the Common Pilot Channel, CPICH of the neighbouring base station;
the total transmit power of the control channels of the neighbouring base station; and
attenuation between the base station and the neighbouring base station.

9. A base station according to claim 8, in which said attenuation is estimated as the CPICH transmit power of the neighbouring base station minus the CPICH received signal code power, RSCP, received from the neighbouring base station.

10. A base station according to any preceding claim, in which at least some of the transmit powers are estimated based on power measurements made by user terminals.

11. A base station according to claim 10, in which the base station ignores reported measurements in respect of other neighbouring base stations than the neighbouring base station providing the strongest measured signals; the measurements including detected Primary Scrambling Codes, PSC, for identification of the neighbouring base stations.

12. A base station according to claim 10 or claim 11, in which upon a user terminal determining equally strong signals from a group of neighbouring base stations, the base station estimates the sum traffic load of the group.

13. A base station according to any preceding claim comprising a receiver configured to detect the pilot transmissions on the pilot channel of the neighbouring base station for determining the transmit power, in which the base station has a different carrier frequency band to the neighbouring base station.

14. A base station according to any of claims 1 to 12, in which the base station uses the same carrier frequency band as the neighbouring base station and the transmit powers of the neighbouring base station are estimated based on power measurements made by user terminals.

15. A method of a base station estimating traffic load on a neighbouring base station by:

obtaining information about the control channels of the neighbouring base station in which the information comprises transmit power on the pilot channel of the neighbouring base station and transmit powers of the other control channels of the neighbouring base station; and
estimating traffic load on the neighbouring base station using said information.


**Amended claims in accordance with Rule 137(2) EPC.**

1. A base station (8) configured to:

obtain information about the control channels of a neighbouring base station (8) in which the information comprises transmit power on the pilot channel of the neighbouring base station and transmit powers of the other control channels of the neighbouring base station; and
estimate traffic load on the neighbouring base station (8) using said information,
**<u>characterised in that</u>** the base station comprises a receiver (12') configured to detect the pilot transmissions on the pilot channel of the neighbouring base station (8) for determining the transmit power, in which the base station (4) has a different carrier frequency band to the neighbouring base station (8).

2. A base station according to claim 1, further configured to transit between an active mode and a sleeping mode dependent upon whether or not said estimated traffic load exceeds a predetermined level.

3. A base station according to claim 1 or claim 2, which is a small cell base station (4), the neighbouring base station being a macrocell base station (8).

4. A base station according to any preceding claim, in which the information comprises received power measured on the pilot channel and signal to interference ratio on the pilot channel.

5. A base station according to claim 4, in which the received power is Received Signal Code Power, RSCP, of the Common Pilot Channel, CPICH, and the signal to interference ratio is the signal to interference ratio, Ec/No, of the Common Pilot Channel, CPICH.

6. A base station according to any preceding claim, in which the information further comprises total transmit power of the control channels of the neighbouring base station (8) comprising the transmit power on the pilot channel of the neighbouring base station (8) and the transmit powers of the other control channels of the neighbouring base station.

7. A base station according to claim 6, in which the information further comprises maximum transmit power of the neighbouring base station.

8. A base station according to any preceding claim, in which the traffic load on the neighbouring base station (8) is estimated using an estimate of traffic channels transmit power of the neighbouring base station, said estimate of traffic channels transmit power being determined from:

received Signal Code Power, RSCP, of the Common Pilot Channel, CPICH of the neighbouring base station;
signal to interference ratio, Ec/No, of the Common Pilot Channel, CPICH of the neighbouring base station;
the total transmit power of the control channels of the neighbouring base station (8); and
attenuation between the base station and the neighbouring base station.

9. A base station according to claim 8, in which said attenuation is estimated as the CPICH transmit power of the neighbouring base station (8) minus the CPICH received signal code power, RSCP, received from the neighbouring base station.

10. A base station according to any preceding claim, in which some of the transmit powers are estimated based on power measurements made by user terminals.

11. A base station according to claim 1 0, in which the base station (4) ignores reported measurements in respect of other neighbouring base stations than the neighbouring base station (8) providing the strongest measured signals; the measurements including detected Primary Scrambling Codes, PSC, for identification of the neighbouring base stations.

12. A base station according to claim 10 or 11, in which upon a user terminal determining equally strong signals from a group of neighbouring base stations, the base station estimates the sum traffic load of the group.

13. A method of a base station (4) estimating traffic load on a neighbouring base station(8) by:

obtaining information about the control channels of the neighbouring base station (8) in which the information comprises transmit power on the pilot channel of the neighbouring base station (8) and transmit powers of the other control channels of the neighbouring base station (8); and
estimating traffic load on the neighbouring base station using said information,
**characterised by**
the base station (4) comprising a receiver (12'), the receiver detecting the pilot transmissions on the pilot channel of the neighbouring base station for detetermining the transmit power,
the base station (4) having a different carrier frequency band to the neighbouring base station (8).

2

Sniffer, 12

((( )))

8 Macrocell B

Small Cell A 4

6

10

Macrocell B's coverage area

*FIG. 1*

Small Cell fully operational with pilot transmissions switched on. UE and/or sniffer measurements can be used to estimate the load of macrocell B.

Sniffer, 12'

((( )))

Macrocell B

Small Cell A

Macrocell B's coverage area

*FIG. 2*

Small Cell fully operational with pilot transmissions
switched on. UE measurements are used to estimate
load of macrocell B.

## FIG. 3

(1)
Start: Small Cell A desires to
estimate macrocell B load

a

(2)
UEs connected to small cell A
report back measurements

b

(3)
Small Cell A chooses the
measurement in which macrocell
B is the dominant BS

c

(4)
Small Cell A performs calculations
on the reported quantities and
estimates macrocell's load

d

## FIG. 4

Europäisches
Patentamt

European
Patent Office

Office européen
des brevets

# EUROPEAN SEARCH REPORT

Application Number

EP 13 29 0219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/044957 A1 (FUJITSU LTD [JP]; LI ZHAOJUN [GB]; BUCKNELL PAUL [GB]; MOULSLEY TIMOTH) 4 April 2013 (2013-04-04) | 1-3,6,15 | INV. H04W24/02 H04W52/02 |
| Y | * page 4, lines 11-17 * <br> * page 5, lines 5-36 * <br> * page 8, lines 14-26 * <br> * page 7, lines 32-36 * <br> * page 9, lines 6-8 * <br> * page 16, lines 1-7 * <br> * page 19, lines 1-19 * <br> * figures 3, 5-7 * <br> ----- | 4,5,7-14 | ADD. H04W84/04 |
| Y | GB 2 492 410 A (UBIQUISYS LTD [GB]) 2 January 2013 (2013-01-02) <br> * page 4, lines 29-30 * <br> * page 5, lines 6-9 * <br> * page 5, line 28 - page 6, line 6 * <br> * page 7, lines 13-27, 35-36 * <br> * page 8, lines 8-9 * <br> * page 11, lines 12-14 * <br> * page 12, lines 7-9 * <br> ----- | 4,5,13, 14 | |
| Y | WO 2008/093100 A2 (UBIQUISYS LTD [GB]; CARTER ALAN [GB]; WHITTAKER STEPHEN [GB]; MAIDA AM) 7 August 2008 (2008-08-07) <br> * page 5, line 30 - page 6, line 18 * <br> * page 8, lines 22-25 * <br> * page 10, lines 5-6 * <br> * page 11, lines 22-28 * <br> * page 13, lines 7-9 * <br> ----- | 7-12 | TECHNICAL FIELDS SEARCHED (IPC) <br><br> H04W |

The present search report has been drawn up for all claims

| Place of search | Date of completion of the search | Examiner |
|---|---|---|
| Munich | 28 March 2014 | Costa, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................
& : member of the same patent family, corresponding
document

EPO FORM 1503 03.82 (P04C01)

EP 2 849 478 A1

**ANNEX TO THE EUROPEAN SEARCH REPORT
ON EUROPEAN PATENT APPLICATION NO.**

EP 13 29 0219

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2014

| Patent document cited in search report | Publication date | Patent family member(s) | Publication date |
|---|---|---|---|
| WO 2013044957 A1 | 04-04-2013 | NONE | |
| GB 2492410 A | 02-01-2013 | GB 2492410 A | 02-01-2013 |
| | | WO 2013005015 A1 | 10-01-2013 |
| WO 2008093100 A2 | 07-08-2008 | CN 101652935 A | 17-02-2010 |
| | | EP 2119031 A2 | 18-11-2009 |
| | | EP 2663133 A2 | 13-11-2013 |
| | | EP 2663134 A2 | 13-11-2013 |
| | | EP 2663135 A2 | 13-11-2013 |
| | | GB 2447439 A | 17-09-2008 |
| | | JP 5277176 B2 | 28-08-2013 |
| | | JP 2010518668 A | 27-05-2010 |
| | | JP 2013192252 A | 26-09-2013 |
| | | JP 2013192253 A | 26-09-2013 |
| | | JP 2013192254 A | 26-09-2013 |
| | | US 2008188265 A1 | 07-08-2008 |
| | | US 2012046055 A1 | 23-02-2012 |
| | | US 2013165175 A1 | 27-06-2013 |
| | | US 2013165176 A1 | 27-06-2013 |
| | | WO 2008093100 A2 | 07-08-2008 |

EPO FORM P0459

For more details about this annex : see Official Journal of the European Patent Office, No. 12/82

13